Europäisches Patentamt

European Patent Office

Office européen des brevets

(11) Numéro de publication: **0 418 121 A1**

# DEMANDE DE BREVET EUROPEEN

(21) Numéro de dépôt: 90402435.3

(51) Int. Cl.5: **C02F 3/28**

(22) Date de dépôt: 04.09.90

(30) Priorité: 14.09.89 FR 8912047

(43) Date de publication de la demande:
20.03.91 Bulletin 91/12

(84) Etats contractants désignés:
**AT BE DE ES GB NL**

(71) Demandeur: **DEGREMONT S.A.**
**183, Avenue du 18 Juin 1940**
**F-92508 Rueil-Malmaison Cédex(FR)**

(72) Inventeur: **Ehlinger, Frédéric**
**2, Avenue des Vignes Benettes**
**F-78230 Le Pecq(FR)**

(74) Mandataire: **Armengaud, Charles**
**Cabinet ARMENGAUD AINE 3, Avenue**
**Bugeaud**
**F-75116 Paris(FR)**

(54) **Procédé de traitement, par fermentation anaérobie, d'eaux résiduaires en vue de l'élimination de la matière organique et des sulfates qu'elles contiennent.**

(57) Procédé de traitement, par fermentation anaérobie, d'eaux résiduaires, en vue de l'élimination de la matière organique et des sulfates qu'elles contien-nent, avec strippage de l'H2S formé, caractérisé en ce que la fermentation est menée dans un réacteur unique (1), avantageusement à culture libre (4), infi-niment mélangé, avec déplacement de l'H2S formé au moyen d'un gaz neutre introduit dans le réacteur au sein de la biomasse (5). L'H2S déplacé est par-tiellement recyclé dans le gaz neutre de strippage (7). La biomasse est maintenue sous agitation par ce gaz neutre.

# PROCEDE DE TRAITEMENT, PAR FERMENTATION ANAEROBIE, D'EAUX RESIDUAIRES EN VUE DE L'ELIMINATION DE LA MATIERE ORGANIQUE ET DES SULFATES QU'ELLES CONTIENNENT

La présente invention concerne un procédé de traitement, par fermentation anaérobie, d'eaux résiduaires en vue de l'élimination de la matière organique et des sulfates qu'elles contiennent.

La dégradation de la matière organique présente dans les eaux résiduaires par fermentation anaérobie, est réalisée par un écosystème complexe ayant pour phase ultime une fermentation se traduisant par la production de méthane ; le rendement de l'épuration à laquelle sont ainsi soumises ces eaux, dépend donc en particulier de l'efficacité de cette dernière phase.

L'écosystème consiste en un mélange de genres bactériens commensaux, dont les matières organiques constituent la chaîne alimentaire ce qui se traduit par leur destruction progressive. On peut distinguer trois phases séparées, généralement simultanées dans les appareils de traitement où coexistent à la fois les différents genres microbiens et des matières a différents stades de leur dégradation.

Dans une première phase, les molécules complexes sont hydrolisées en molécules plus simples dénommées acides gras volatils (ou AGV) tels que l'acide lactique, l'acide acétique, l'acide propionique, l'acide butyrique.

La deuxième phase, nommée acétogénèse, correspond à la transformation de ces acides organiques polycarbonés en acide acétique. Cette étape, réalisée par des bactéries dites acétogènes, produit de l'hydrogène et du gaz carbonique.

La troisième phase est la méthanisation dans laquelle les métabolites résiduels sont transformés en méthane par des bactéries méthanogènes de deux espèces distinctes, les unes utilisant l'hydrogène et le gaz carbonique, les autres dites acétoclastes, utilisant l'acide acétique.

Lorsque, comme c'est souvent le cas, les eaux résiduaires contiennent en plus des sulfates, une flore dite sulfato-réductrice se développe en leur présence ; elle produit de l'hydrogène sulfuré (H2S) et perturbe le fonctionnement de l'écosystème épuratoire de la façon suivante :
- au cours de la deuxième phase, les bactéries sulfato-réductrices consomment une partie des AGV, au détriment des acétogènes, c'est-à-dire de la production d'acide acétique et donc de méthane. De plus, l'H2S produit inhibe le fonctionnement des acétogènes si bien qu'une fraction des AGV peut échapper à la dégradation et subsister dans le liquide résiduaire à l'issue du traitement ;
- les bactéries sulfato-réductrices nuisent également à la troisième phase, d'une part en ce qu'elles consomment l'hydrogène et le gaz carbonique au préjudice des méthanogènes, d'autre part en ce que le H2S produit inhibe le fonctionnement des bactéries acétoclastes.

La présence de sulfates dans les effluents destinés à être épurés par fermentation méthanique risque donc de limiter les performances des réacteurs biologiques dans lesquels s'effectue cette fermentation.

Il est possible d'éviter les phénomènes d'inhibition physiquement en isolant des autres phases la phase la plus sensible, c'est-à-dire celle de formation du méthane. Dans ce but, on crée dans deux réacteurs séparés les conditions biologiques nécessaires pour que se produisent les différentes étapes.

C'est ainsi que le document FR-A-2.484.990 concerne un procédé permettant de diminuer la teneur en H2S libre dans un digesteur. L'élimination de l'H2S se fait dans des ouvrages externes, soit à partir du gaz de fermentation, soit à partir de l'effluent traité sortant du réacteur. Après l'élimination de l'H2S, l'effluent épuré est recyclé partiellement dans le réacteur. Dans le procédé suivant ce brevet, les phases de formation des acides, de réduction des sulfates et de méthanogénèse se déroulent au sein d'un seul réacteur et de façon simultanée.

Le document GB-A-2.143.810 décrit un procédé anaérobie intermédiaire entre un lit de boue ou lit expansé et un lit à film fixé. Il préconise une élimination étagée de l'H2S. D'une part, l'effluent sortant du réacteur est débarrassé de l'H2S par un strippage dans une colonne extérieure, balayée par un gaz inerte. D'autre part, le réacteur lui-même doit être balayé par ce gaz inerte, ce qui risque de perturber la stabilité du lit de biomasse et rend difficile le contrôle du fonctionnement du réacteur. De plus, ce strippage étagé pénalise le bilan économique de l'installation industrielle.

Enfin, suivant le document EP-0241999, on a déjà proposé de réaliser la fermentation anaérobie par passages successifs de l'effluent dans deux réacteurs à culture fixée. L'acidification se déroule dans le premier réacteur et est couplée avec la réduction biologique des sulfates. L'effluent sortant du premier réacteur est débarrassé de l'H2S par strippage au moyen d'un gaz inerte dans un ouvrage intermédiaire avant d'entrer dans le deuxième réacteur.

Toutefois d'après le document, il est nécessaire de réguler le pH entre 6,5 et 6,7 de façon à favoriser la sulfato-réduction et le strippage de l'H2S. Cependant, la régulation du pH dans un ouvrage industriel est coûteuse et difficile à optimiser, surtout dans le cas où l'on utilise dans ce but de l'acide sulfurique qui accroît encore la teneur en sulfates.

On a constaté, de façon absolument surprenante que si, conformément à l'invention, la fermentation était menée dans un réacteur unique à culture libre, infiniment mélangé, avec déplacement de l'H2S formé au moyen d'un gaz neutre introduit dans le réacteur au sein de la biomasse, le pH du milieu s'établissait de lui-même aux environs de la neutralité et même s'auto-régulait autour de 6,9 et le taux de réduction des sulfates s'établissait aux environs de 80 % - alors que, en appliquant les procédés connus, le pH variait dans des limites importantes et le taux de conversion des sulfates ne dépassait pas 50 %.

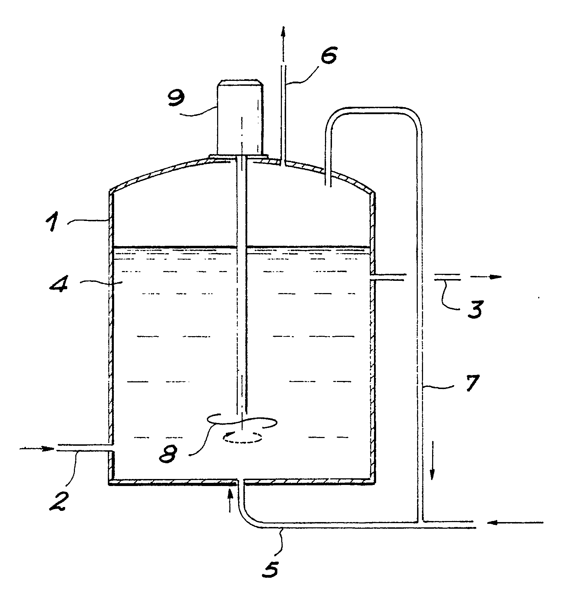

On peut mettre en oeuvre le procédé suivant l'invention au moyen, comme le montre la figure unique du dessin annexé, d'un réacteur constitué par une enceinte 1 à laquelle l'effluent à traiter est amené par une canalisation 2 et de laquelle il sort, épuré, par la canalisation 3.

La biomasse 4 se présente sous la forme d'une culture libre.

Un gaz neutre est introduit dans l'enceinte 1, au sein de la biomasse 4 par une canalisation 5, la phase gazeuse produite étant évacuée en 6, avec possibilité de recyclage partiel au moyen de la canalisation 7 branchée sur la canalisation 5.

La biomasse est constamment brassée, grâce au gaz introduit dans son sein, et/ou par un organe 8 adapté, mû par un moteur 9. Le strippage d'H2S directement dans le réacteur 1, par injection d'un gaz inerte au sein de la biomasse, conformément à l'invention, provoque une remontée du pH qui, d'une part ne nuit pas au déplacement de l'H2S de la phase liquide vers la phase gazeuse et d'autre part, favorise l'activité des bactéries sulfato-réductrices et donc l'élimination des sulfates.

En opérant conformément à l'invention, l'élimination de l'H2S provoque non seulement une remontée du pH, mais également par voie de conséquence, permet d'obtenir un taux de réduction des sulfates de 80 % alors qu'il n'est jamais supérieur à 50 %.

En outre, grâce au procédé suivant l'invention, il est inutile de contrôler le pH dans le réacteur puisque ce pH s'auto-régule aux environs de la neutralité et on obtient dans le réacteur des concentrations en sulfure inférieures à 100 mg/l.

**Revendications**

1 - Procédé de traitement, par fermentation anaérobie, d'eaux résiduaires, en vue de l'élimination de la matière organique et des sulfates qu'elles contiennent, effectué au moyen d'un réacteur unique dans lequel est introduit, au sein de la biomasse qu'il contient, un gaz neutre destiné au déplacement de l'H2S formé, caractérisé en ce que le réacteur utilisé est un réacteur à culture libre, infiniment mélangé.

2 - Procédé suivant la revendication 1, dans lequel l'H2S déplacé est partiellement recyclé dans le gaz neutre de strippage.

3 - Procédé suivant la revendication 1, dans lequel la biomasse est maintenue sous agitation par le gaz neutre qui y est introduit.

**Office européen
des brevets**

**RAPPORT DE RECHERCHE
EUROPEENNE**

Numéro de la demande

**EP 90 40 2435**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 461 684   (DEGREMONT)<br>* Page 6, revendications 1,3 * | 1,3 | C 02 F 3/28 |
| X | CHEMICAL ABSTRACTS, vol. 10, septembre 1987, page 343, abrégé no. 83283x, Columbus, Ohio, US; V.E. GUBIN et al.: "Biochemical treatment of sulfate-containing wastewater",<br>& KHIM. TEKHNOL. VODY 1987, 9(3), 268-70 (Russ.) | 1,3 | |
| X | CHEMICAL ABSTRACTS OF JAPAN, vol. 111, no. 22, 27 novembre 1989, page 392, abrégé no. 200962n, Columbus, Ohio, US; J.P. MAREE: "Biological process for sulfate removal from industrial effluent",<br>& CHEMSA 1989, 15(4), 125-6, 136 (Eng) | 1,2 | |
| A | CHEMICAL ABSTRACTS, vol. 108, no. 22, 30 mai 1988, page 349, abrégé no. 192201j, Columbus, Ohio, US; B.L. HILTON et al.: "A comparison of anaerobic reactors operating with and without the addition of sulfates",<br>& WATER POLLUT. RES., J. CAN. 1987, 22(3), 444-55 | 1 | |
| A | FR-A-2 484 990   (DEGREMONT)<br>* Page 5, revendication 1 * | 1 | **DOMAINES TECHNIQUES RECHERCHES (Int. Cl.5)**<br><br>C 02 F |

Le présent rapport de recherche a été établi pour toutes les revendications

| Lieu de la recherche | Date d'achèvement de la recherche | Examinateur |
|---|---|---|
| La Haye | 05 décembre 90 | TEPLY J. |